# EUROPÄISCHE PATENTANMELDUNG

(11) **EP 1 172 774 A1**
(43) Veröffentlichungstag der Anmeldung: **16.01.2002**
(21) Anmeldenummer: 00115148.9
(22) Anmeldetag: 12.07.2000
(51) Int. Cl.: G07F 7/10, G07F 7/08

(54) **Datenträgerbasiertes elektronisches Waren/Dienstleistungsvermittlungs/Kaufsystem**

(71) Anmelder: PROMEC SYSTEMS GMBH & CO. KG, 98527 Suhl (DE)
(72) Erfinder: S.K.H, Eberhard Herzog von Württemberg, 70597 Stuttgart (DE); Albertshofer, Christian, 98617 Meiningen (DE); Praegner, Siegfried, 85640 Putzbrunn (DE)
(74) Vertreter: Wahl, Hendrik, Dr.-Ing.

(57) **Zusammenfassung**

Die Erfindung betrifft ein datenträgerbasiertes elektronisches Waren/Dienstleistungsvermittlungs/kaufsystem, in dem mittels Datenträgerkarten (2) über ein Systemrechner (12,24) Transaktionen mit unterschiedlichen Waren- und Dienstleistungsanbietern (Containerpartnern) abgewickelt werden können, bei welchem System
- auf der Datenträgerkarte (2) wenigstens ein Speicherplatz (6) für benutzerindividuelle Daten vorgesehen ist,
- im System ein Speicherplatz (8) für benutzerindividuelle Containerdaten vorgesehen, d.h. für Daten, die geeignet sind, eine Verknüpfung des Benutzers zu unterschiedlichen Anbietern (Containerpartnern) im Einkaufssystem herzustellen,
- wenigstens eine auf der Karte (2) oder einem anderen Platz (24) im System angeordnete Verknüpfungslogik (25), die bei einem Zugriff des Benutzers auf das System und/oder einer bereits mit einem Containerpartner abgewickelten Transaktion des Benutzers selbsttätig wenigstens eine weitere Aktion desselben oder anderer Containerpartner in Abhängigkeit von den benutzerindividuellen Daten und/oder den Daten der Transaktion des Benutzers herbeiführt, welche weitere Aktion dem Benutzer über ein im System vorhandenes Display (16) oder Sprachausgabe übermittelt wird,
wobei die Verknüpfungslogik die Entscheidung auf den gespeicherten benutzerindividuellen Daten (6) und/oder den gespeicherten benutzerindividuellen Containerdaten (8) und auf seitens der Containerpartner vordefinierte Zugriffsmerkmale basiert.

## Beschreibung

Die Erfindung betrifft ein datenträgerbasiertes elektronisches Waren/Dienstleistungsvermittlungs/kaufsystem. Es sind mittlerweile chipkartenbasierte Systeme bekannt, die es dem Benutzer der Chipkarte ermöglichen, bei einer Reihe von Vertragspartnern, nachfolgend kurz Containerpartner, Transaktionen zu tätigen. Dabei werden bereits zum Teil benutzerindividuelle Daten selbsttätig in einen Transaktionsvorgang aufgenommen. Der Nachteil für den Benutzer besteht jedoch darin, dass er sich für einen größeren Vorgang, zum Beispiel eine Reisebuchung, eine Vielzahl damit verbundener unterschiedlicher Waren oder Dienstleistungen, wie z.B. Mietwagen und Reiseversicherungen, selbst zusammensuchen muss.

Es ist daher Ziel der vorliegenden Erfindung, ein Chipkartensystem zu entwickeln, das es dem Benutzer ermöglicht, auch umfangreichere Vorgänge mit mehreren Transaktionen schnell und mühelos durchzuführen und die es den Containerpartnern ermöglicht, ihre Präsenz beim Benutzer zu verstärken und ihre Angebote an den Benutzer des Systems zielgerichteter und wirksamer zu richten.

Diese Aufgabe wird gelöst durch ein System mit den Merkmalen des Anspruchs 1. Vorteilhafte Weiterbildungen der Erfindung sind Gegenstand der Unteransprüche.

Das erfindungsgemäße kartengestützte Einkaufssystem umfaßt ein elektronisches Terminalsystem, welches dem Benutzer ermöglicht, in einen virtuellen digitalen Marktplatz einzutreten. Die Eintrittskarte zu dem System ist durch eine Datenträgerkarte, insbesondere Chipkarte gebildet, die benutzerindividuelle Daten des Benutzers enthält. Unter dem Begriff "Terminal" werden nachfolgend alle Endgeräte verstanden, die in der Lage sind, unter Nutzung einer Chipkarte eine Verbindung zum Internet oder zu einem anderen Netz herzustellen, also auch Home-PCs und entsprechend ausgerüstete Handys.

Das System umfasst mehrere Komponenten, deren Wechselwirkung nachfolgend erläutert werden soll:
- Der System- oder Kartenbetreiber, der das System verwaltet,
- Containerpartner, die einen Vertrag mit dem Systembetreiber abgeschlossen haben und die ausgewählten Benutzern des Systems gezielt Angebote unterbreiten wollen,
- Benutzern, die über eine Chipkarte zur Nutzung des Systems verfügen,
- eine Datenträger- insbesondere Chipkarte mit persönlichen Daten des Benutzers
- Speicherbereichen im System mit persönlichen Daten des Benutzers und Transaktionsdaten, d.h. Daten über bisher getätigte Transaktionen des Benutzers im System,
- wenigstens eine Verknüpfungslogik, zur Überprüfung, ob einem Benutzer des Systems basierend auf einem Vergleich von vordefinierten Merkmalen des Containerpartners mit den persönlichen Daten und/oder benutzerindividuellen Containerdaten und/oder Transaktionsdaten des Benutzers ein Angebot unterbreitet werden soll.

Schlüssel des gesamten Systems ist die Datenträgerkarte. Diese kann im einfachsten Fall eine Kennung haben, die es dem System ermöglicht, den Benutzer zu identifizieren. Über die Kennung hat das System, d.h. eine Verknüpfungslogik Zugriff auf die benutzerindividuelle Daten. Vorzugsweise ist die Datenträgerkarte eine Chipkarte und enthält alle notwendigen benutzerindividuellen Daten wie soziodemographische Daten, wie zum Beispiel Geschlecht, Alter, Beruf, Hobbies, Familienstand, bereits getätigte Transaktionen etc.. Zusätzlich gibt es auf der Chipkarte oder im System mehrere benutzerindividuelle Speicherbereiche, kurz Containerdatenbereiche, in denen unterschiedliche Anbieter Daten ablegen können, die es den Containerpartnern ermöglichen, dem Benutzer beim Eintritt in den virtuellen Marktplatz ein individuell zugeschnittenes Angebot zu unterbreiten oder ein Angebot, für welches der Benutzer aufgrund seiner individuellen Daten als Zielgruppe in Frage kommt. Diese Überprüfung erfolgt in einer Verknüpfungslogik, die im System, insbesondere im Terminal vorgesehen ist.

Über die Verknüpfungslogik des Systems werden der Zugriff des Benutzers auf das System und/oder die Transaktion des Benutzers mit weiteren Aktionen desselben oder anderer Containerpartner verknüpft, die über die Verknüpfungslogik bzw. einem von der Verknüpfungslogik verwendeten Datenbereich des Containerpartners frei definierbar, z.B. von der Thematik her benachbart sind oder die als ergänzende Waren/Dienstleistungen zu den Waren/Dienstleistungen einer Transaktion betrachtet werden könnten. Somit enthält die Verknüpfungslogik vorzugsweise eine Matrix, in der ein Containerpartner Verknüpfungen zu anderen Waren und Dienstleistungen oder Merkmalen der benutzerindividuellen Daten definiert hat, und die als Basis für die Herstellung von Verknüpfungen dient. Die entsprechenden Verknüpfungsdaten liegen vorzugsweise in Containerdatenbereichen der Zugriffsterminal. Sie können jedoch auch auf der Chipkarte in den Containerdatenbereichen oder auf einem Zentralrechner oder auf dem Rechner eines Containerpartners abgelegt sein.

Jeder Containerdatenbereich der Karte wird vorzugsweise vom entsprechenden Containerpartner definiert und beschrieben. Er kann alle Vorgänge aufweisen, die zwischen Benutzer und dem Containerpartner stattgefunden haben, so z.B. auch an den Benutzer abgegebene Angebote des Containerpartners als auch benutzerindividuelle (soziodemographische) Daten, Transaktionsdaten und Daten, die von der Verknüpfungslogik für eine Verknüpfungsentscheidung verwendet werden können.

Wenn zum Beispiel ein Benutzer eine Transaktion mit einem Partyservice durchführt, kann eine automatische Verknüpfung zu einem Getränkeservice erstellt werden, der ebenfalls als Containerpartner auf der Chipkarte des Benutzers gespeichert ist.

Wie bereits oben angedeutet, ermöglicht diese Verknüpfungslogik für die Containerpartner eine zielgerichtete Werbung bzw. ein zielgerichtetes Angebot, die/das eine sehr viel höhere Akzeptanz und Erfolgswahrscheinlichkeit hat als jede(s) andere Werbung/Angebot, da ein Kunde vorliegt, dessen Eigenschaften aus seinen benutzerindividuellen Daten bekannt sind und der eventuell bereits eine oder mehrere Transaktionen getätigt hat und somit in gewisser Weise in seinem Kaufverhalten bekannt ist.
Der Containerpartner kann somit aufgrund seiner vordefinierten Verknüpfungsmerkmale Zielgruppen mit hoher Erfolgswahrscheinlichkeit definieren und ansprechen. Ein Angebot an eine derartige Personengruppe erfolgt damit marketingorientiert und zielgerichtet und hat daher eine sehr viel höhere Erfolgswahrscheinlichkeit als sie bisher im Markt erreichbar war.

Vorzugsweise enthält das System einen Prioritätsalgorithmus, der im Falle der Generierung mehrerer Verknüpfungen nach einer Transaktion des Benutzers eine Priorität zwischen den Containerpartnern herstellt, die dafür Sorge trägt, dass eine gewisse sinnvolle Abfolge bei der Unterbreitung der Angebote der verschiedenen Containerpartner an den Benutzer eingehalten wird, wobei der Prioritätsalgorithmus diese zeitliche Abfolge nach logischen Gesichtspunkten steuert und die Angebotsabfolge nicht aufdringlich wirken soll.

Die den Containerdaten zugeordneten Anbieter können zum Beispiel beim Zugriff des Benutzers auf das System, d.h. beim Eintritt in den virtuellen Marktplatz als Angebots- oder Schaltflächen angezeigt werden, auf die der Bennutzer zugreifen kann.

Anbieter können zum Beispiel Versicherungen, Mietwagenunternehmen, Banken etc. sein. Wenn daher der Benutzer auf das System zugreift, werden diese Firmen bzw. Angebote dieser Firmen auf seinem Eröffnungsbildschirm angezeigt, womit deren Präsenz beim Endverbraucher beträchtlich erhöht wird. Containerpartner sind die Unternehmen, die bei dem Karten- oder Systembetreiber einen Vertrag abgeschlossen haben, der die Nutzung des Systems regelt und Entgelte festlegt.

Ist ein Containerpartner noch nicht auf der Chipkarte des Benutzers geladen, obwohl der Benutzer entsprechend den vordefinierten gespeicherten Verknüpfungsmerkmalen als Zielgruppe zu betrachten ist, so kann an den Benutzer die Frage gerichtet werden, ob er Kunde des Containerpartners werden möchte. Bestätigt der Benutzer diese Frage, so werden benutzerindividuelle Containerdaten auf die Chipkarte des Benutzers geladen. Bei einem zukünftigen Zugriff des Benutzers auf das System erhält dann der Benutzer zielgerichtete Angebote des auf die Chipkarte geladenen Containerpartners, wobei der Angebotsvorgang und daraus resultierende Aktionen im Containerdatenbereich der Chipkarte abgelegt oder vermerkt werden können.

Optional kann das System auch ein Suchprogramm enthalten, wenn der Benutzer nach bestimmten Waren/Dienstleistungen sucht. Er kann dort auf dies Seite eines passenden Containerpartners verwiesen werden, wo er wiederum gefragt wird, ob er Kunde werden möchte, womit er künftig automatisch Angebote des Containerpartners erhält.

Der Vorteil des Systems liegt ferner darin, dass mit der Abgabe oder dem Einholen eines Angebots, z.B. beim Öffnen der entsprechenden Seite, seitens des Containerpartners gleich die benutzerspezifischen Daten des Benutzers verwendet werden können, um das Angebot des Anbieters individuell auf den Benutzer abzustimmen.

Mit der Annahme eines Angebots seitens des Benutzers, z.B. einer Reisebuchung, wird selbsttätig der Containerdatensatz des entsprechenden Containerpartners aktualisiert und gegebenenfalls die Transaktionsdaten in einen benutzerindividuellen Speicher geschrieben, der insbesondere auf der Chipkarte angeordnet ist. Generell bewirkt der Abschluss jeder Transaktion die Generierung eines Transaktionsdatensatzes, der von der Verknüpfungslogik des Systems unter Berücksichtigung aller auf den Chipkarten befindlicher Containerdatensätze auf das Vorliegen von Merkmalen untersucht wird, die eine Aktion eines weiteren Containerpartners verursachen könnte. Der Transaktionsdatensatz enthält vorzugsweise persönliche Daten des Benutzers als auch die Transaktionsdaten und wird auf der Chipkarte gespeichert.

Gleichzeitig kann ein Buchungssatz erzeugt werden, der ein Konto, das zum Beispiel bei einem anderen Containerpartner geführt ist, automatisch belastet, wobei die erfolgreiche Belastung des Kontos dem Containerpartner der Transaktion (Reiseveranstalter) durch einen Bestätigungsdatensatz mitgeteilt werden kann, wonach wiederum der Reiseanbieter alle erforderlichen Vorgänge in die Wege leiten kann.

Selbstverständlich kann mit jeder erfolgreichen oder bestätigten Transaktion von vordefinierten Containerpartner oder sogar vom Systembetreiber selbst ein Guthaben nach einem Rabatt- oder Bonussystem auf das Konto des Benutzers gebucht werden, was für den Benutzer die Nutzung der von den Containerpartnern seiner Chipkarte abgegebenen Angebote attraktiv macht.

Das System beinhaltet eine Benutzeroberfläche mit verschiedenen Seiten, die den Benutzer durch das System des virtuellen Marktplatzes führen. Dieses System kann auf dem üblichen Web-Standard basieren und HTML als auch Java für die Seitenformate verwenden als auch den gleichen Übertragungsmodus wie das Internet. Prinzipiell ist es auch möglich, das Internet als Portal für das System zu verwenden. In diesem Fall ist vorzugsweise ein Verschlüsselungssystem oder ein Firewall vorzusehen, um das System gegen systemfremde Eingriffe zu sichern. Es läßt sich jedoch auch jede andere Art von Netzsoftware verwenden.

Das Netz umfasst vorzugsweise eine Vielzahl von Terminals z.B. Home-PCs, die sowohl über einen Chipkartenleser als auch über eine Eingabe- und Ausgabeeinheit verfügen. Als Eingabeeinheit dient entweder eine Tastatur, eine Maus oder ein Touch-Screen-Display. Als Ausgabeeinheit dient ein herkömmlicher Monitor oder ein Touch-Screen-Display bzw. Lautsprecher oder Drucker. Selbstverständlich können verschiedene Ein- und Ausgabeeinheiten miteinander kombiniert werden. Jedes Terminal verfügt darüber hinaus über eine Datenschnittstelle, z.b. ein Modem oder ISDN-Anschluss für einen Datenfernverkehr, z.B. via Internet und/oder Intranet. Durch die Tatsache, dass jeder Home-PC unter Installation eines Chipkartenlese/schreibgeräts als Terminal verwendet werden kann, kann die Durchsetzung des Systems beträchtlich verbessert werden.

Die Benutzung der Terminal kann zentral oder auch dezentral gesteuert werden.

Im Fall einer zentralen Terminalverwaltung wird zumindest für den Zeitpunkt des Verbindungsaufbaus bzw. Einloggens nach dem Einstecken einer Chipkarte eine Verbindung mit einem Zentralrechner aufgebaut, über den die Identität und Zugangsberechtigung des Karteninhabers, gegebenenfalls unter Verwendung eines Passwortsystems, überprüft werden kann. Weiterhin können gegebenenfalls über den Zentralrechner Daten der Seiten (Pages) der Containerpartner zum Terminal transferiert werden.

Im Fall einer dezentralen Steuerung enthält jedes Terminal ein Identifizierungssystem, das die Identifizierung des Benutzers und gegebenenfalls von Passwörtern ermöglicht. Im Falle von On-line-Buchungen muss in jedem Fall eine Verbindung zu einer zentralen Steuerung hergestellt werden, um die Kontodaten zu überprüfen und entsprechende Bestätigungssignale zu empfangen. Weiterhin muss auch bei einer dezentralen Steuerung der Terminals in zeitlichen Abständen z.B. über Modem eine Verbindung zum Zentralsystem erfolgen, um die Terminals upzudaten, z.B. um neue Pages von neuen Containerpartnern aufzuspielen oder die Pages von Containerpartnern zu löschen, deren Verträge mit dem Kartenbetreiber abgelaufen sind. Gegebenenfalls enthält das Terminal einen eigenen Speicher, auf dem die Seiten (Pages) der Containerpartner abgelegt sind. Es kann jedoch auch lediglich die zum Zugriff auf das Internet erforderliche Hardware enthalten. Die Hardware ist vorzugsweise derart aufgebaut, dass ein Zugriff nur auf ein zentrales systemeigenes Suchsystem als auch auf die Seiten der Containerpartner im System bzw. der auf der Chipkarte gespeicherten Containerpartner möglich ist.

Das Konto des Benutzers wird vorzugsweise ebenfalls bei einem Containerpartner geführt, der mit dem Kartenbetreiber einen Vertrag hat. Ein derartiger Containerpartner kann eine Bank oder eine Sparkasse sein. Der Bezahlvorgang kann mit Bestätigung der Transaktion durch den Benutzer online vom Konto gebucht werden. Der Karteninhaber erhält in diesem Fall einen Buchungsbeleg, der ausgedruckt oder auch auf die Karte geschrieben werden kann.

Wenn eine Hotelkette Containerpartner des Kartenbetreibers ist, hat diese Hotelkette Hardware-Einrichtungen, die die Benutzung der Chipkarte für die Hardware-Einrichtungen des Hotels, zum Beispiel Schlösser, erlauben.

Wenn zum Beispiel der Kunde über ein Terminal einen Hotelaufenthalt gebucht hat, so wird auf dem Containerspeicherplatz des Containerpartners ein Buchungsdatensatz abgelegt, der die Identifizierung des gebuchten Hotels, den Buchungszeitraum und bereits eine Zimmernummer enthält. Die Türschlosssysteme des Hotels enthalten elektronische Schlösser, die in der Lage sind, den Datensatz der Chipkarte zu lesen und das Schloss bei zutreffendem Buchungsdatensatz zu öffnen.

Weiterhin sind bei den Containerpartnern vorzugsweise Datenausgabegeräte vorgesehen, die es dem Benutzer gestatten, zumindest die den betreffenden Containerpartner betreffenden Daten wie zum Beispiel Reservierungsdaten oder dergleichen anzuzeigen und/oder zu drucken.

Der Kontakt zwischen dem Zentralrechner und den Terminals erfolgt vorzugsweise über Internet, in welchem Fall keinen speziellen Datenübertragungswege vorgesehen werden brauchen. Die Übermittlung sicherheitsrelevanter Daten des Systems kann jedoch zusätzlich direkt zwischen Zentralrechner und Terminal erfolgen.

Als Containerpartner können auch Telefongesellschaften fungieren. Die Terminal sollten dann über eine für die Nutzung von Telekommunikationsdienstleistungen notwendige Hardware verfügen.

Die Erfindung wird nachfolgend anhand der schematischen Zeichnung beschrieben. In dieser zeigen:
- Fig. 1: eine Ansicht einer Chipkarte zur Nutzung des Systems,
- Fig. 2: eine generelle Darstellung des virtuellen Marktplatzsystems, und
- Fig. 3: eine detaillierte Darstellung eines Terminals des Marktplatzsystems aus Fig. 1.

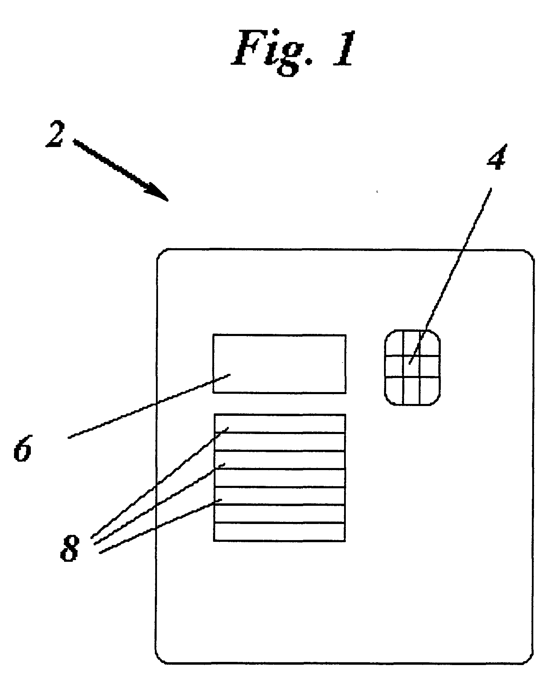

Figur 1 zeigt eine Chipkarte 2 zur Nutzung in einem virtuellen Einkaufssystem gemäß der Erfindung. Die Chipkarte im herkömmlichen Scheckkartenformat umfasst einen Logik/Speicherchip mit Auslesekontakten 4 und einem nicht dargestellten Systemdatenbereich. Der Chip umfasst einen nur schematiasch dargestellten Benutzerdatenspeicher 6 und mehrere Containerdatenspeicher 8, wobei für jeden Containerpartner des Kunden ein Speicherplatz 8 vorgesehen ist.

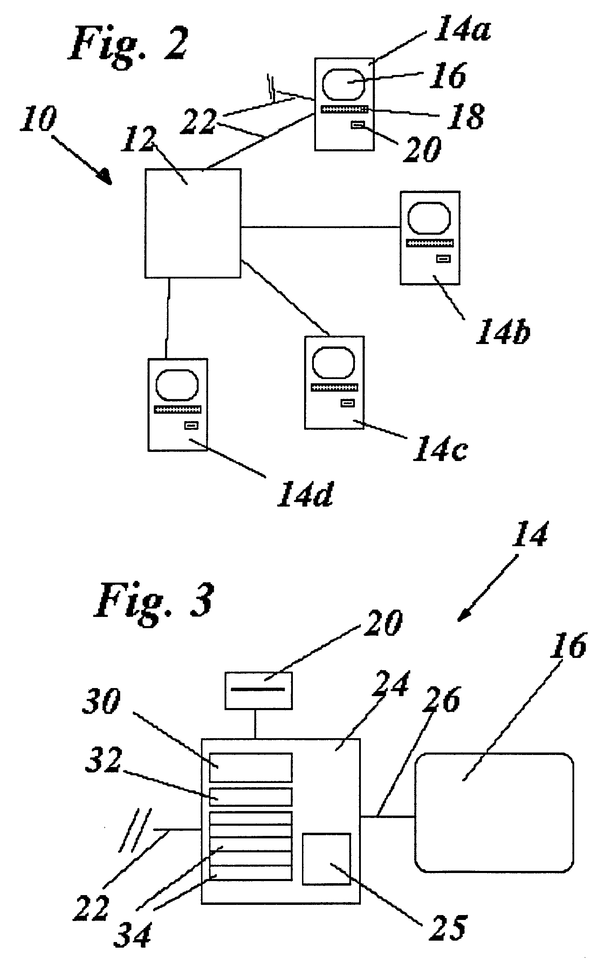

Figur 2 zeigt ein virtuelles Einkaufssystem 10 bestehend aus einem Zentralrechner 12 und einer Reihe an Terminals 14a bis 14d, die jeweils über ein Touch-Screen-Display 16, eine Eingabetastatur 18 und einen Chipkartenleser 20 verfügen. Jedes Terminal 14 ist über eine Datenleitung 22 zumindest zeitweise mit dem Zentralrechner 12 verbunden. Der Datenferntransfer kann über ein Modem oder über jede andere Schnittstelle erfolgen. Über die Datenleitung 22 kann das Terminal 14 auch mit dem Internet verbunden sein, zum Beispiel auch mit den Containerpartnern direkt, ohne dass dies eine Verbindung über den Zentralrechner 12 erfordert.

Figur 3 zeigt detaillierter den Aufbau eines Terminals 14. Das Terminal 14 hat einen Rechner 24, der mit dem Chipkartenleser 20 verbunden ist als auch über eine Ein/Ausgabeleitung 26 mit einem Touch-Screen-Display 16. Optional können noch weitere Peripheriegeräte wie Cursor-Steuerungen oder Tastaturen vorgesehen sein. Der Rechner 24 enthält einen Systemspeicherbereich 30, einen Kartendatenbereich 32, in welchem Benutzerdaten als auch Transaktionsdaten des Benutzers abgelegt werden als auch Containerdatenbereiche 34, die Zugriffsdaten oder Pages aller mit dem Kartenbetreiber in Vertrag stehender Containerpartner erhalten. Der Rechner 24 enthält weiterhin die Verknüpfungslogik 25, um Aktionen von Containerpartnern in Zusammenhang mit einem Zugriff des Benutzers auf das System oder einer Transaktion des Benutzers zu steuern.

Weiterhin ist der Rechner 24 über die Datenleitung 22 an den Zentralrechner 12 ankoppelbar.

Der Systemdatenbereich 30 des Rechners 24 enthält die Kommunikationsplattform für den Datenaustausch zwischen Karte und Rechner, für die Ein- und Ausgabe von Daten auf/von den Touch-Screen-Display 16 als auch für die Kommunikation zwischen Terminal 14 und Zentralrechner 12 bzw. zwischen Terminal 14 und den Rechnern der einzelnen Containerpartner.

Die Funktion des Systems wird wie folgt beschrieben. Nachdem ein Benutzer seine Chipkarte in den Chipkartenleser 20 eingesteckt hat, lädt der Rechner 24 Daten aus dem Benutzerdatenspeicher 6 und den Containerdatenspeicherplätze 8 der Chipkarte in den Kartendatenbereich 32 des Terminals 14. Dem Benutzer wird daraufhin eine Begrüßungsseite angezeigt, deren Aufbau von einer Verknüpfungslogik gesteuert wird. Jeder Containerpartner des Systems definiert nämlich vorab Merkmale, die zu einer Verknüpfung (Link) eines Kunden mit dem Containerpartner führen sollen. Die Verknüpfungslogik überprüft, ob die vom Containerpartner definierten Merkmale mit den Benutzerdaten übereinstimmen. Diese Merkmale können nicht nur persönliche Daten des Kunden sein, wie Alter, Geschlecht, Hobbies etc. sondern auch Transaktionsdaten aus dem bisherigen Kaufverhalten des Kunden im System, die auf dem Benutzerdatenspeicher 6 oder auch auf den Containerdatenspeichern 8 der Karte 2 abgelegt sind. Stellt die Verknüpfungslogik im Rechner 24 eine Übereinstimmung fest, so wird der Benutzer, falls er noch kein Kunde des Containerpartners ist, gefragt, ob er Kunde werden will. Im Falle der Zustimmung werden die Daten des Containerpartners aus dem Containerdatenbereich 34 des Rechners 24 auf den Containerdatenspeicher 8 der Chipkarte 2 geladen. Ist der Benutzer bereits Kunde des Containerpartners so kann dieser in die Startseite des Systems ein Angebot an den Benutzer einstellen, auf das der Kunde zugreifen kann. Alle zukünftigen Transaktionen mit diesem Containerpartner des Benutzers werden im Containerdatenspeicher 8 der Chipkarte gespeichert. Der interaktive Zugriff des Kunden erfolgt dabei vorzugsweise menügeführt über den Touch-Screen 16.

Ist der Benutzer bereits Kunde des Containerpartners, erhält der Kunde ein seinem Kaufverhalten und soziodemographischen Daten entsprechendes Angebot, wenn er den vom Containerpartner definierten Merkmalen für das Angebot entspricht, was, gegebenenfalls unter Nutzung von Daten aus dem Containerdatenbereich 8 der Karte 2 in der Verknüpfungslogik 25 des Rechners 24 oder Zentralrechners 12 eruiert wird. Der Benutzer erhält somit auf seinem Eröffnungsbildschirm eine Anzahl von Angeboten der auf seiner Karte geladenen Containerpartner, die auf ihn individuell zugeschnitten sind.

Schließt der Benutzer eine Transaktion mit einem Containerpartner ab, so überprüft die Verknüpfungslogik wiederum, ob diese Transaktion zu einem vordefinierten Zugriffselement des selben oder eines anderen Containerpartners gehört. Falls dies der Fall ist, wird dem Benutzer nach Abschluss der Transaktion selbsttätig ein Angebot des anderen Containerpartners oder ein weiteres Angebot desselben Containerpartners unterbreitet.

In einem dezentralen offline betriebenen Terminal sind die Pages oder Zugriffsdaten der Containerpartner in den Containerspeicherbereichen 34 des Rechners 24 abgelegt und werden je nach Transaktion oder Zugriffstätigkeit des Benutzers über den Touch-Screen 16 angezeigt. Vorzugsweise ist jedoch für die Eingabe von Zahlen und Buchstaben auch eine Tastatur 18 vorgesehen.

Bei einem online betriebenen Terminal 14 kann der Containerdatenspeicherbereich 34 des Terminals reduziert werden, da in diesem Fall das Terminal allein die Aufgabe hat, die Peripheriegeräte wie Chipkartenleser, Touch-Screen, Verknüpfungslogik und Tastatur zu steuern während die Anzeige von Informationen über net-pages realisiert wird. Der Benutzer greift in diesem Fall direkt auf die bei den Containerpartnern abgelegten Webseiten zu. In dem Benutzerspeicherbereich 32 des Rechners 24 des Terminals 14 werden von der Karte somit nur die Webadressen der Containerpartner abgelegt, wobei die Adresse der Pages der einzelnen Containerpartner bereits unter Berücksichtigung der Benutzerindividuellen Daten von der Chipkarte erfolgt, die in dem Kartendatenbereich 32 des Terminals abgelegt wurden. Dies kann realisiert werden, indem entweder mit der Anforderung der Webpage bereits eine Identifikationsnummer für den Benutzer mitgesandt wird, so dass die Webpage vom Containerpartner unter Berücksichtigung der persönlichen Daten dargestellt werden kann, oder die persönlichen Daten werden zum Rechner 24 in die vom Containerpartner erhaltene leere Webpage eingesetzt. Jeder Zugriff und jeder Transaktionsvorgang des Benutzers wird in dem Kartendatenbereich 32 des Terminals 14 als auch gegebenenfalls in dem individuellen Benutzerdatenbereich 6 oder Containerdatenbereich 8 der Chipkarte 2 gespeichert und als Ausgangspunkt für die weitere Menüsteuerung, d.h. die Anzeige von Links (Verweisen) etc. verwendet.

In periodischen Abständen werden sowohl die offline als auch die online betriebenen Terminals von dem Zentralrechner 12 (Fig. 1) des Systems upgedated, um sowohl die Software auf den neuesten Stand zu bringen als auch neue Containerpartner zu laden und die Containerpartner mit abgelaufenen Verträgen aus dem System zu löschen.

Das Gesamtsystem ist äußerst benutzerfreundlich und bietet eine fortschrittliche, anwenderfreundliche Weiterentwicklung des e-Commerce.

In der Erfindung ist es weitgehend unwesentlich, ob Datenspeicherbereiche oder Rechnerbereiche auf der Chipkarte 2, dem Terminal 14 oder dem Zentralrechner 12 vorgesehen sind. Vorteilhaft ist jedoch, wenn auf der Chipkarte 2 eine Speicher 6 für die benutzerindividuellen Daten als auch für die benutzerindividuellen Containerdaten 8 vorgesehen ist, was den Einsatz weitgehend autarker Terminals ermöglicht.

## Patentansprüche

1. Datenträgerbasiertes elektronisches Waren/Dienstleistungsvermittlungs/kaufsystem, in dem mittels Datenträgerkarten (2) über einen Systemrechner (12,24) Transaktionen mit unterschiedlichen Waren- und Dienstleistungsanbietern (Containerpartnern) abgewickelt werden können, bei welchem System
- auf der Datenträgerkarte (2) wenigstens ein Speicherplatz (6) für benutzerindividuelle Daten vorgesehen ist,
- im System ein Speicherplatz (8) für benutzerindividuelle Containerdaten vorgesehen, d.h. für Daten, die geeignet sind, eine Verknüpfung des Benutzers zu unterschiedlichen Containerpartnern im Einkaufssystem herzustellen,
- wenigstens eine auf der Karte (2) oder einem anderen Platz (24) im System angeordnete Verknüpfungslogik (25), die bei einem Zugriff des Benutzers auf das System und/oder einer bereits mit einem Containerpartner abgewickelten Transaktion des Benutzers selbsttätig wenigstens eine weitere Aktion desselben oder anderer Containerpartner in Abhängigkeit von den benutzerindividuellen Daten und/oder den Daten der Transaktion des Benutzers herbeiführt, welche weitere Aktion dem Benutzer über ein im System vorhandene Datenausgabe (16) übermittelt wird,
wobei die Verknüpfungslogik die Entscheidung auf den gespeicherten benutzerindividuellen Daten (6) und/oder den gespeicherten benutzerindividuellen Containerdaten (8) und auf seitens der Containerpartner vordefinierte Zugriffsmerkmale basiert.

2. System nach Anspruch 1,
bei dem die Datenträgerkarte durch eine Chipkarte (2) gebildet ist, die Speicherplätze (8) für die benutzerindividuellen Containerdaten aufweist.

3. System nach Anspruch 1 oder 2,
bei dem die Verknüpfungslogik (25) eine Matrix umfasst, in der das Vorliegen seitens eines Containerpartners vorher definierter Merkmale oder einer Kombination von Merkmalen der benutzerindividuellen Daten und/oder der Containerdaten des Transaktionspartners des Benutzers als Basis für das Starten einer weiteren Aktion des Containerpartners definiert.

4. System nach einem der vorhergehenden Ansprüche,
umfassend einen Prioritätsalgorithmus, der die Abfolge mehrerer weiterer Aktionen von Containerpartner in Übereinstimmung mit einer gespeicherten oder errechneten Zugriffsabfolge festlegt.

5. System nach einem der vorhergehenden Ansprüche,
bei dem die weitere Aktion die selbsttätige Anzeige einer Angebotsseite, z.B. Internetpage ist,
und bei dem eine zentrale Steuerung vorgesehen ist, die benutzerindividuelle Daten und/oder benutzerindividuelle Containerdaten und/oder Daten aus einer anderen Transaktion in Datenfelder der Seite einsetzt.

6. System nach einem der vorhergehenden Ansprüche,
bei dem im System ein Konto und/oder eine elektronische Börse des Benutzers eingerichtet ist, welche(s) selbsttätig nach der Bestätigung einer Transaktion durch den Benutzer belastet wird.

7. System nach Anspruch 6,
bei dem vom Kontobetreiber, z.B. einem Containerpartner, ein Bestätigungsdatensatz an den Transaktionspartner des Benutzers gesandt wird, woraufhin, die angeforderte Transaktion gestartet wird.

8. System nach Anspruch 6 oder 7,
bei dem ein zentrale Steuerung des Zugriffssystems in Abhängigkeit von gespeicherten Rabatt- oder Bonusdaten nach dem bestätigten Abschließen einer Transaktion eine Gutschriftbuchung von Containerpartnern und/oder den Systembetreibern auf das Konto auslöst.

9. System nach einem der vorhergehenden Ansprüche,
bei dem die Daten einer getätigten Transaktion in den Containerdatenspeicherplatz (8) der Datenträgerkarte (2) und/oder einen Speicher (32) im System oder einen Speicher des Containerpartners geschrieben werden.

10. System nach einem der vorhergehenden Ansprüche,
bei dem Daten in Zusammenhang oder als Folge einer Transaktion auf der Datenträgerkarte (2) oder einem Speicher (32) des Systems oder Containerpartners abgelegt werden, und dass Terminals zur Anzeige dieser Daten und gegebenenfalls der in Zusammenhang mit der Transaktion erforderlichen Vorgänge vorgesehen sind.

11. System nach Anspruch 10,
bei dem Hardwarekomponenten, wie z.B. elektrische Türschlösser, vorgesehen sind, die einen Chipkartenleser und eine dezentrale Steuerung für ihre Funktion in Abhängigkeit von den Transaktionsdaten haben.
